# DEMANDE DE BREVET EUROPEEN

(11) **EP 2 322 392 A1**
(43) Date de publication de la demande: **18.05.2011**
(21) Numéro de dépôt: 10290558.5
(22) Date de dépôt: 15.10.2010
(51) Int. Cl.: B60R 21/207

(54) **Siège de véhicule automobile comprenant une armature et un module d'airbag associé à ladite armature**

(30) Priorité: 22.10.2009 FR 0905094
(71) Demandeur: Centre d'étude et de recherche pour l'automobile (CERA), 51100 Reims (FR)
(72) Inventeur: Patte, Damien, 51490 Epoye (FR); Bonte, Emmanuel, 51100 Reims (FR)
(74) Mandataire: Sayettat, Julien Christian

(57) **Abrégé**

L'invention concerne un siège (1) de véhicule automobile, ledit siège comprenant: une armature (2) ; un module (3) d'airbag associé à ladite armature ; une matelassure (4) comprenant un bloc (5) de rembourrage recouvrant ladite armature et logeant ledit module, ledit bloc étant revêtu d'une coiffe (6) de revêtement, ladite coiffe comprenant un premier (7) et un deuxième (8) format de revêtement reliés entre eux par une couture (9) disposée sur un chemin de déploiement de l'airbag, ladite couture étant déchirable sous l'effet du déploiement de l'airbag ; une première (10) et une deuxième (11) bande de renfort, ladite première - respectivement deuxième - bande étant fixée par une extrémité audit premier - respectivement deuxième - format à proximité de ladite couture déchirable, un premier (13) - respectivement deuxième (14) - moyen d'emboîtement étant fixé à son autre extrémité ; un premier (16) et un deuxième (17) moyen d'emboîtement réciproque solidaires de ladite armature, lesdits moyens d'emboîtement réciproques coopérant avec lesdits moyens d'emboîtement, lesdites bandes étant disposées de part et d'autre du chemin de déploiement de l'airbag.

## Description

L'invention concerne un siège de véhicule automobile.

Il est connu, notamment du document EP 1 023 206, de réaliser un siège de véhicule automobile, ledit siège comprenant :
- une armature,
- un module d'airbag associé à ladite armature,
- une matelassure comprenant un bloc de rembourrage recouvrant ladite armature et logeant ledit module, ledit bloc étant revêtu d'une coiffe de revêtement, ladite coiffe comprenant deux formats de revêtement reliés entre eux par une couture disposée sur un chemin de déploiement de l'airbag, ladite couture étant déchirable sous l'effet du déploiement de l'airbag,
- deux bandes de renfort, chacune desdites bandes étant fixée par une première extrémité à un format respectif à proximité de ladite couture déchirable, un moyen d'emboîtement étant fixé à sa deuxième extrémité, les moyens d'emboîtement de la première et de la deuxième bande étant complémentaires et coopérant entre eux, lesdites bandes étant disposées de part et d'autre du chemin de déploiement de l'airbag.

Le rôle des bandes de renfort est de permettre à la couture déchirable de se rompre sans retard lors du déploiement de l'airbag, indépendamment de l'élasticité que peuvent présenter les formats de revêtement, ce qui évite notamment une dégradation de la coiffe et/ou un risque de déploiement défectueux de l'airbag.

L'agencement connu présente l'inconvénient d'un montage délicat, l'opérateur étant tenu de saisir les bandes ensemble pour les associer entre elles, ce qui est peu ergonomique et peut demander un effort important de sa part.

Par ailleurs, cet agencement requiert un positionnement des bandes en vis à vis l'une de l'autre, ce qui peut s'avérer incompatible avec certains chemins de déploiement d'airbag.

L'invention a pour but de pallier ces inconvénients.

A cet effet, et selon un premier aspect, l'invention propose un siège de véhicule automobile, ledit siège comprenant :
- une armature,
- un module d'airbag associé à ladite armature,
- une matelassure comprenant un bloc de rembourrage recouvrant ladite armature et logeant ledit module, ledit bloc étant revêtu d'une coiffe de revêtement, ladite coiffe comprenant un premier et un deuxième format de revêtement reliés entre eux par une couture disposée sur un chemin de déploiement de l'airbag, ladite couture étant déchirable sous l'effet du déploiement de l'airbag,
- une première et une deuxième bande de renfort, ladite première - respectivement deuxième - bande étant fixée par une extrémité audit premier - respectivement deuxième - format à proximité de ladite couture déchirable, un premier - respectivement deuxième - moyen d'emboîtement étant fixé à son autre extrémité,
- un premier et un deuxième moyen d'emboîtement réciproque solidaires de ladite armature, lesdits moyens d'emboîtement réciproques coopérant avec lesdits moyens d'emboîtement, lesdites bandes étant disposées de part et d'autre du chemin de déploiement de l'airbag.

L'agencement proposé permet un montage indépendant des deux bandes de renfort, ce qui simplifie le montage en termes de rapidité et d'efforts à déployer de la part de l'opérateur de fabrication.

En outre, les bandes peuvent être disposées non en regard l'une de l'autre, ce qui permet une plus grande liberté dans le choix des chemins de déploiement d'airbag.

D'autres particularités et avantages de l'invention apparaîtront dans la description qui suit, faite en référence aux figures jointes dans lesquelles :
- la figure 1 est une représentation schématique partielle en coupe d'un siège selon une première réalisation,
- les figures 2 sont une représentation schématique partielle en perspective d'un siège selon une deuxième réalisation avant montage du premier moyen d'emboîtement (figure 2a), après montage du premier moyen d'emboîtement (figure 2b) et après montage du deuxième moyen d'emboîtement (figure 2c).

En référence aux figures, on décrit un siège 1 de véhicule automobile, ledit siège comprenant :
- une armature 2,
- un module 3 d'airbag associé à ladite armature,
- une matelassure 4 comprenant un bloc 5 de rembourrage - notamment en mousse - recouvrant ladite armature et logeant ledit module, ledit bloc étant revêtu d'une coiffe 6 de revêtement, ladite coiffe comprenant un premier 7 et un deuxième 8 format de revêtement reliés entre eux par une couture 9 disposée sur un chemin de déploiement de l'airbag, ladite couture étant déchirable sous l'effet du déploiement de l'airbag,
- une première 10 et une deuxième 11 bande de renfort, notamment en textile résistant à la traction, ladite première - respectivement deuxième - bande étant fixée, notamment par couture 12, par une extrémité audit premier - respectivement deuxième - format à proximité de ladite couture déchirable, un premier 13 - respectivement deuxième 14 - moyen d'emboîtement étant fixé, notamment par couture 15, à son autre extrémité,
- un premier 16 et un deuxième 17 moyen d'emboîtement réciproque solidaires de ladite armature, lesdits moyens d'emboîtement réciproques coopérant avec lesdits moyens d'emboîtement, lesdites bandes étant disposées de part et d'autre du chemin de déploiement de l'airbag.

Selon les réalisations représentées, le deuxième moyen d'emboîtement 14 comprend une butée 18 de verrouillage du premier moyen d'emboîtement 13, de sorte que ledit premier moyen soit bloqué en configuration emboîtée une fois que ledit deuxième moyen est emboîté.

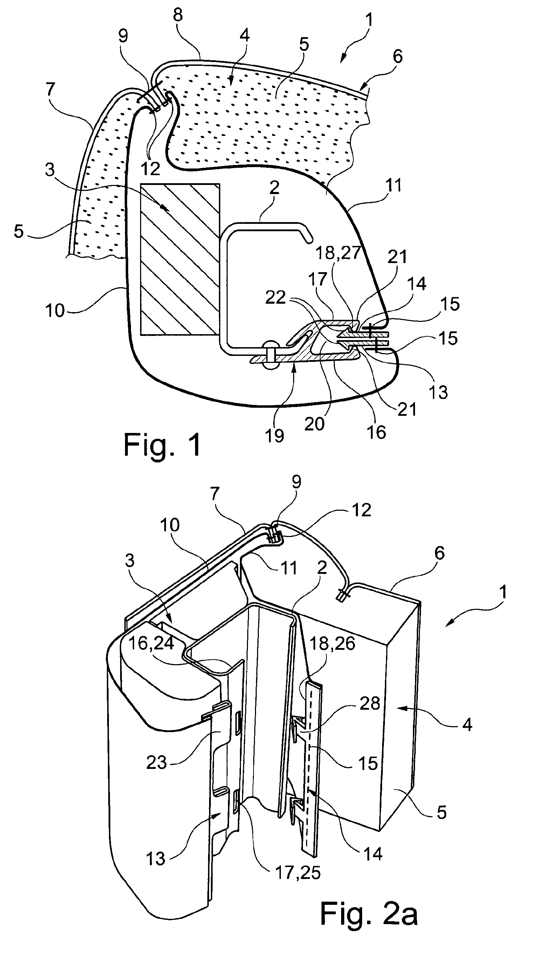

Selon la réalisation de la figure 1, les moyens d'emboîtement réciproques 16,17 sont intégrés à une pièce support 19 intermédiaire - notamment à base de matériau plastique moulé - solidaire de l'armature 2.

La pièce support 19 est ici rivetée à l'armature 2.

En variante non représentée, elle pourrait être fixée au module 3 d'airbag.

En variante non représentée, la pièce support 19 peut comprendre un moyen de clippage par lequel elle est fixée par clippage solidairement à l'armature 2, par exemple directement sur cette dernière ou bien sur le module 3 d'airbag.

Selon la réalisation représentée sur la figure 1, les moyens d'emboîtement 13,14 sont sous forme de profilés, les moyens d'emboîtement réciproques 16,17 étant sous forme de murs parallèles définissant une gorge 20, l'extrémité libre desdits murs comprenant un retour 21 tourné vers l'intérieur de ladite gorge, lesdits moyens d'emboîtement comprenant chacun un harpon 22 et étant engagés l'un contre l'autre dans ladite cavité, lesdits moyens d'emboîtement étant bloqués par coopération desdits harpons et desdits retours correspondants, la butée 18 de verrouillage étant formée par une paroi 27 du deuxième moyen d'emboîtement 14, ladite paroi s'appuyant sur ledit premier moyen d'emboîtement.

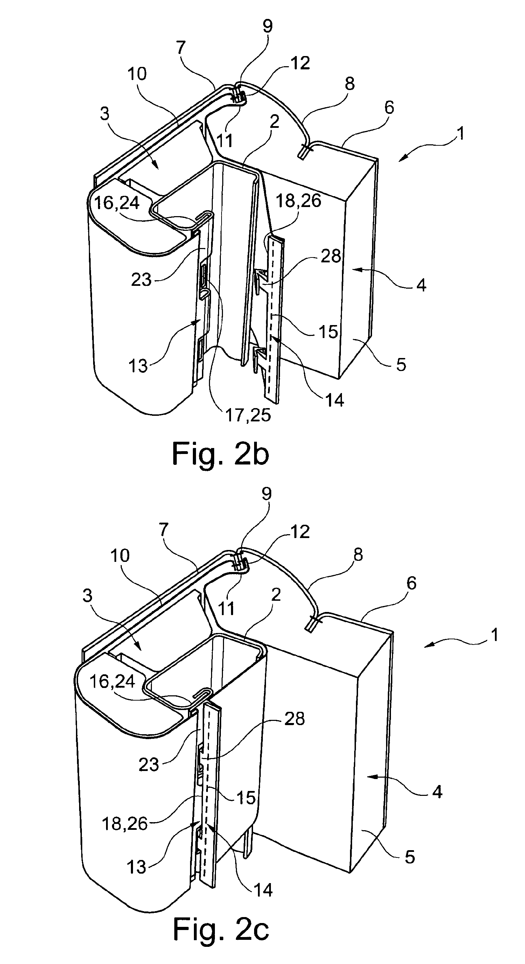

On décrit à présent la réalisation des figures 2.

Selon cette réalisation, les moyens d'emboîtement 13,14 sont sous forme de profilés crénelés - obtenus notamment par extrusion de matière plastique suivie d'une découpe - les créneaux 23 du premier moyen d'emboîtement 13 présentant une section en forme de J emboîtée dans une lame 24 solidaire de l'armature 2. Sur les figures 2, la lame 24 est formée sur une partie de l'armature 2 de sorte à être venue de matière avec ladite armature. En variante non représentée, la lame 24 peut être rapportée sur l'armature.

La lame 24 forme premier moyen d'emboîtement réciproque 16, les créneaux 28 du deuxième moyen d'emboîtement 14 présentant une section en forme de harpon, lesdits créneaux du deuxième moyen d'emboîtement alternant avec ceux dudit premier moyen d'emboîtement et étant emboîtés dans des lumières 25 prévues dans ladite lame, lesdites lumières formant deuxième moyen d'emboîtement réciproque 17, les espaces inter-créneaux 26 dudit deuxième moyen d'emboîtement formant butée 18 de verrouillage en étant disposés sur lesdits créneaux du premier moyen d'emboîtement.

Une telle réalisation permet de minimiser le nombre ou la taille des lumières 25 à réaliser dans la lame 24 - par rapport à une réalisation prévoyant des harpons sur les deux moyens d'emboîtement 13,14 - un nombre ou une taille trop importante conduisant à une fragilisation de ladite lame, ce qui peut s'avérer particulièrement préjudiciable lorsque ladite lame est partie intégrante de l'armature 2, qui voit sa résistance diminuer.

## Revendications

1. Siège (1) de véhicule automobile, ledit siège comprenant :
• une armature (2),
• un module (3) d'airbag associé à ladite armature,
• une matelassure (4) comprenant un bloc (5) de rembourrage recouvrant ladite armature et logeant ledit module, ledit bloc étant revêtu d'une coiffe (6) de revêtement, ladite coiffe comprenant un premier (7) et un deuxième (8) format de revêtement reliés entre eux par une couture (9) disposée sur un chemin de déploiement de l'airbag, ladite couture étant déchirable sous l'effet du déploiement de l'airbag,
• une première (10) et une deuxième (11) bande de renfort, ladite première - respectivement deuxième - bande étant fixée par une extrémité audit premier - respectivement deuxième - format à proximité de ladite couture déchirable, un premier (13) - respectivement deuxième (14) - moyen d'emboîtement étant fixé à son autre extrémité,
• un premier (16) et un deuxième (17) moyen d'emboîtement réciproque solidaires de ladite armature, lesdits moyens d'emboîtement réciproques coopérant avec lesdits moyens d'emboîtement, lesdites bandes étant disposées de part et d'autre du chemin de déploiement de l'airbag.

2. Siège selon la revendication 1, **caractérisé en ce que** le deuxième moyen d'emboîtement (14) comprend une butée (18) de verrouillage du premier moyen d'emboîtement (13), de sorte que ledit premier moyen soit bloqué en configuration emboîtée une fois que ledit deuxième moyen est emboîté.

3. Siège selon l'une quelconque des revendications 1 ou 2, **caractérisé en ce que** les moyens d'emboîtement réciproques (16,17) sont intégrés à une pièce support (19) intermédiaire solidaire de l'armature (2).

4. Siège selon revendications 2 et 3, **caractérisé en ce que** les moyens d'emboîtement (13,14) sont sous forme de profilés, les moyens d'emboîtement réciproques (16,17) étant sous forme de murs parallèles définissant une gorge (20), l'extrémité libre desdits murs comprenant un retour (21) tourné vers l'intérieur de ladite gorge, lesdits moyens d'emboîtement comprenant chacun un harpon (22) et étant engagés l'un contre l'autre dans ladite cavité, lesdits moyens d'emboîtement étant bloqués par coopération desdits harpons et desdits retours correspondants, la butée (18) de verrouillage étant formée par une paroi (27) du deuxième moyen d'emboîtement (14).

5. Siège selon la revendication 2, **caractérisé en ce que** les moyens d'emboîtement (13,14) sont sous forme de profilés crénelés, les créneaux (23) du premier moyen d'emboîtement (13) présentant une section en forme de J emboîtée dans une lame (24) solidaire de l'armature (2), ladite lame formant premier moyen d'emboîtement réciproque (16), les créneaux (28) du deuxième moyen d'emboîtement (14) présentant une section en forme de harpon, lesdits créneaux du deuxième moyen d'emboîtement alternant avec ceux dudit premier moyen d'emboîtement et étant emboîtés dans des lumières (25) prévues dans ladite lame, lesdites lumières formant deuxième moyen d'emboîtement réciproque (17), les espaces inter-créneaux (26) dudit deuxième moyen d'emboîtement formant butée (18) de verrouillage en étant disposés sur lesdits créneaux du premier moyen d'emboîtement.
